# FASCICULE DE BREVET EUROPEEN

(11) **EP 1 354 780 B1**
(45) Date de publication et mention de la délivrance du brevet: **16.07.2008**
(21) Numéro de dépôt: 03290950.9
(22) Date de dépôt: 16.04.2003
(51) Int. Cl.: B62B 3/00, A47J 47/16, A47B 31/00, A47F 5/13

(54) **Dispositif de stockage ou de manutention de bacs pour aliments et modules pour le dit dispositif**
Vorrichtung zur Lagerung und Handhabung von Speisetabletten und Modul für die Vorrichtung
Storage and handling device for food trays and modules for said device

(30) Priorité: 16.04.2002 FR 0204704
(43) Date de publication de la demande: 22.10.2003
(73) Titulaire: UGITECH, 73400 Ugine (FR); Tesnière, François, 75011 Paris (FR)
(72) Inventeur: Tesnière, François, 75011 Paris (FR)
(74) Mandataire: Lagrange, Jacques Etienne M.M.

(56) Documents cités:
- DE-C- 19 506 431
- GB-A- 924 538
- GB-A- 931 803
- GB-A- 2 148 850
- US-A- 5 048 702
- US-A- 5 330 060

## Description

La présente invention concerne un dispositif de stockage ou de manutention de contenants, et notamment de bacs pour d'aliments dans des installations de restauration collective.

Dans les installations de restauration collective, les aliments tels que les plats préparés sont manipulés en vrac dans des bacs alimentaires normalisés en acier inoxydable. Les bacs alimentaires sont stockés sur des chariots comportant des montants verticaux et des glissières ou sur des étagères fixes. Ce stockage des bacs alimentaires présente notamment l'inconvénient d'être difficile à nettoyer et donc pose des problèmes d'hygiène. En effet, les chariots ou les étagères sont de trop grande dimension pour pouvoir être introduits dans des machines à laver. De plus, ils comportent de nombreuses parties anguleuses ou des cavités qu'il est difficile de nettoyer convenablement.

Un dispositif de stockage de bacs pour aliments est par exemple décrit dans le document US-A-5048702.

Ce problème se rencontre de la même façon dans diverses activités qui nécessitent un contrôle sérieux de l'hygiène ou de la propreté, et par exemple, dans les hôpitaux ou dans l'industrie électronique.

Le but de la présente invention est de remédier à cet inconvénient en proposant un moyen de stockage ou de manutention de bacs alimentaires qui puisse facilement faire l'objet de nettoyages efficaces.

A cet effet, l'invention a pour objet un dispositif de stockage ou de manutention de bacs pour aliments pour collectivités ou analogues constitué d'une pluralité de modules séparables empilés de façon à former au moins une colonne et d'un plateau support comportant au moins un moyen de réception d'un module, chaque module étant destiné à recevoir un bac pour aliments et étant conformé de telle sorte que la partie inférieure de chaque module s'encastre dans la partie supérieure d'un autre module ou dans un moyen de réception d'un module du plateau support; les modules ne comportant pas de cavité ouverte ni d'angles droits rentrants.

De préférence, au moins un module est conformé de telle sorte qu'un bac pour aliments puisse être introduit et retiré dudit module en le faisant glisser sur la partie inférieure du dit module et que ledit bac ne puisse être introduit que dans une seule direction par rapport audit module et de telle sorte qu'un bac pour aliments disposé dans le module ne puise pas glisser accidentellement hors du module.

De préférence, le plateau support ne comporte pas de cavité ouverte et il peut comporter des moyens pour le faire rouler sur le sol.

L'invention concerne également un module pour un dispositif de stockage ou de manutention de bacs pour aliments qui comporte deux faces latérales dont l'écartement est supérieur ou égal à la largeur d'un bac pour aliments et un fond destiné à recevoir un bac pour aliments. La partie supérieure du module est conformée de telle sorte qu'elle puisse recevoir avec encastrement la partie inférieure d'un autre module, et, au moins après encastrement d'un module supérieur dans un module inférieur, qu'il ne soit pas possible d'introduire un bac pour aliments dans le module supérieur en le faisant glisser perpendiculairement aux faces latérales du module supérieur, le module ne comportant ni cavité ouverte ni angle droit rentrant.

Dans un mode de réalisation particulier, le module est constitué d'un fil ou d'un tube plié de façon à former au moins les arêtes extérieures des parois latérales et un fond capable de recevoir un bac pour aliments, les extrémités du fil ou du tube étant raccordées de façon à former une structure continue.

De préférence, chaque face latérale du module comporte deux montants verticaux et une arête supérieure généralement horizontale raccordée aux montants verticaux par des angles rentrants, la distance qui sépare les extrémités extérieures de l'arête généralement horizontale étant inférieure à la distance qui sépare les extrémités internes de l'arête inférieure de la face latérale de telle sorte que l'arête supérieure d'une face latérale d'un module puisse s'encastrer dans l'arête inférieure d'une face latérale d'un autre module.

De préférence, deux portions du tube ou du fil dont est constitué le module sont pliées pour s'étendre sur la face inférieure du module de façon à former un fond susceptible de recevoir un bac pour aliments et sont raccordées aux montants verticaux de telle sorte que les arêtes supérieures des parois latérales d'un module puissent s'encastrer dans la partie inférieure d'un autre module.

De préférence, les deux portions du tube ou du fil pliées de façon à constituer le fond du module sont légèrement inclinées par rapport au plan du fond du module de telle sorte que le fond du module ait une légère concavité orientée vers l'intérieur du module.

Le module est, par exemple, en acier inoxydable et les extrémités du fil ou du tube sont raccordées par soudage bout à bout.

Dans un deuxième mode de réalisation, le module est constitué d'une plaque pliée et emboutie de façon à former un fond et deux parois latérales dont les arêtes sont ourlées, l'écartement interne des arêtes supérieures des faces latérales étant supérieur ou égal à l'écartement extérieur des faces latérales au voisinage du fond, et la longueur extérieure des arêtes supérieures de faces latérales étant inférieure ou égale à la longueur intérieure des faces latérales au niveau du fond, de telle sorte que les arêtes supérieures des faces latérales d'un module puissent s'encastrer dans la partie inférieure d'un autre module. Ce module est, de préférence, en acier inoxydable.

Dans un troisième mode de réalisation, le module est constitué d'un croisillon dont les bras sont bombés vers l'extérieur du module et sont prolongés par des montants verticaux comportant des raidisseurs, les montants verticaux étant prolongés par des bras horizontaux s'étendant en direction de l'axe vertical du module, les faces supérieures des bras horizontaux étant conformées en forme de gouttière de façon à pouvoir coopérer avec les faces inférieures des bras du croisillon d'un autre module. De préférence, le module est constitué d'une feuille en acier inoxydable découpée et emboutie.

Le dispositif selon l'invention a l'avantage de pouvoir être nettoyé efficacement et facilement. En effet, chaque module est de petite taille et peut donc être introduit dans une machine à laver. De plus, l'absence d'angles droits entrants et de cavités ouvertes évite l'accumulation de saletés dans des zones difficiles à nettoyer.

L'invention va maintenant être décrite plus en détails et de façon non limitative en regard des figures annexées dans les quelles :
- la figure 1 est une vue de face d'un dispositif de stockage ou de manutention de bacs pour aliments comportant une pluralité de modules empilés,
- la figure 1a est une vue en perspective de la base d'un dispositif de stockage ou de manutention de bacs pour aliments,
- la figure 2 est une vue de profil d'un dispositif de stockage ou de manutention de bacs pour aliments comportant deux modules empilés,
- la figure 3a est une vue en perspective d'un dispositif de stockage ou de manutention de bacs pour aliments, comportant un moyen de stabilisation des modules empilés,
- la figure 3b est une vue de dessus montrant le verrouillage d'un module et d'un moyen de stabilisation,
- la figure 3c est une vue partielle d'un dispositif de stockage ou de manutention comportant un moyen de stabilisation des modules empilés,
- la figure 4 est une vue en perspective d'un module pour un dispositif de stockage ou de manutention de bacs pour aliments, constitué d'un tube plié,
- la figure 5 est une vue en perspective d'un module pour un dispositif de stockage ou de manutention de bacs pour aliments,
- la figure 6 est une vue en perspective d'un module pour un dispositif de stockage ou de manutention de bacs pour aliments,

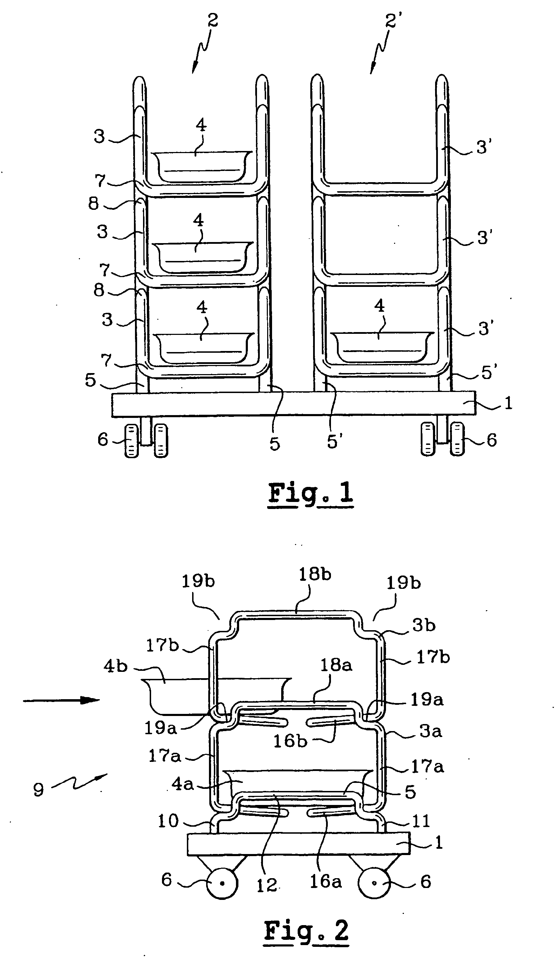

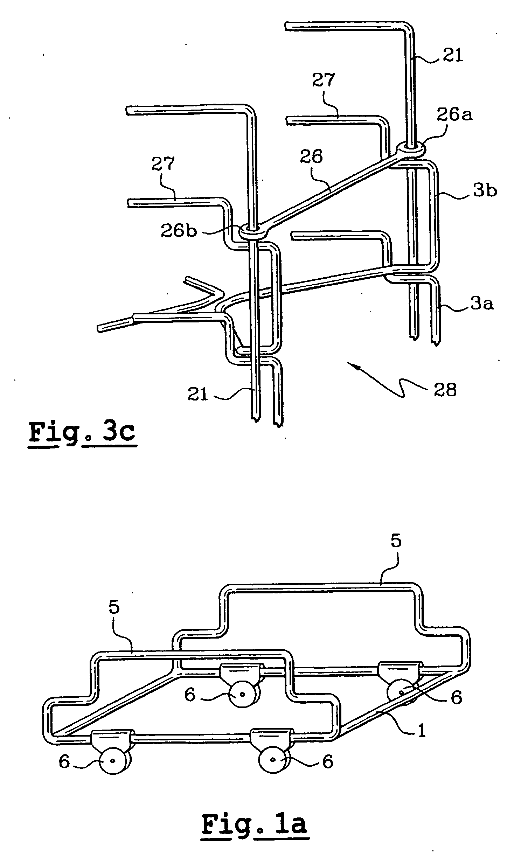

Le dispositif de stockage ou de manutention de bacs pour aliments ou analogues représenté à la figure 1, en vue de face, est constitué d'un plateau 1 supportant deux colonnes parallèles, repérées généralement par 2 et 2', de modules 3 et 3' destinés à recevoir des bacs pour aliments 4. Le plateau 1 comporte des moyens 5 et 5' de réception d'un module 3 ou 3'. Le plateau comporte en outre des roulettes 6 qui permettent de le déplacer par roulement sur le sol. Les modules 3 et 3' sont empilés les uns sur les autres et la partie inférieure 7 de chaque module 3 est encastrée dans la partie supérieure 8 du module qui est juste en dessous ou dans les moyens 5 ou 5' de réception d'un module. Ainsi, les modules 3 et 3' constituent des colonnes 2 et 2' ayant une bonne stabilité.

A la figure 2 on a représenté de façon plus détaillée un dispositif de stockage ou de manutention de bacs pour aliments, vu de profil, et comportant des modules selon un premier mode de réalisation afin de bien montrer les avantages de l'invention. Ces modules seront décrits plus en détails plus loin.

Le dispositif de manutention ou de stockage repéré généralement par 9, comporte un plateau 1 muni de roulettes 6 et deux moyens 5 (un seul visible sur la figure) de réception d'un premier module 3a. Sur le premier module 3a est disposé un second module 3b identique au module 3a. Dans le premier module 3a, on a représenté un bac pour aliments 4a en position de stockage. Dans le second module 3b, on a représenté un bac pour aliments 4b en cours d'introduction dans le module par glissement selon la flèche.

Le moyen 5 de réception d'un module est constitué d'un tube fixé sur le plateau 1 par ses deux extrémités 10 et 11, et plié de façon à constituer une traverse horizontale 12 raccordée aux extrémités 10 et 11 par deux angles rentrants 14 et 15.

A noter que, dans une variante de réalisation représentée à la figure 1a, la base du dispositif constituée par les plateau 1 et les moyens de réception 5 d'un premier module peut être réalisé à l'aide de tubes pliés et soudés sur lesquels les roulettes 6 sont fixées directement, ce qui permet un nettoyage plus facile. La base peut également être constituée d'un module muni de roulettes

Le premier module 3a et le second module 3b sont constitués, comme cela sera explicité plus loin, d'un tube plié de façon à former une partie inférieure 16a, 16b, prolongée par des montants verticaux 17a, 17b, reliés par des angles rentrants 19a, 19b à une traverse horizontale 18a, 18b. Le dispositif de stockage ou de manutention étant vu de profil, sur la figure on ne voit que deux montants verticaux et qu'une traverse par module, mais on comprendra que chaque module comporte quatre montants verticaux et deux traverses horizontales, de façon à former deux faces latérales. Comme on peut le voir sur la figure 2, les traverses horizontales 12 du moyen de réception d'un module et 18a d'un module empêchent de glisser un bac pour aliments dans une direction perpendiculaire à ces traverses.

La partie inférieure 16a du premier module 3a disposé directement sur le plateau 1 est encastrée dans le moyen 5 de réception d'un module.

La partie inférieure 16b du second module 3b, disposé sur le premier module 3a, est encastrée dans les angles rentrants 19a de raccordement de la traverse horizontale 18a avec les montants verticaux 17a du premier module 3a. Ainsi, les modules empilés forment une étagère stable et cette étagère peut être démontée simplement en séparant les modules.

Les tubes dont sont constitués les modules 3a et 3b sont pliés avec des angles arrondis et les extrémités sont soudées bout à bout, si bien que les modules ne comportent ni d'angle droit aigu rentrant ni de cavité dans lesquels les saletés peuvent s'accumuler. Par angle droit aigu, on entend tout angle dont les côtés sont raccordés sans arrondi. Cette disposition permet un nettoyage facile et efficace.

De même, le moyen 5 de réception d'un module sont pliés avec des angles arrondis.

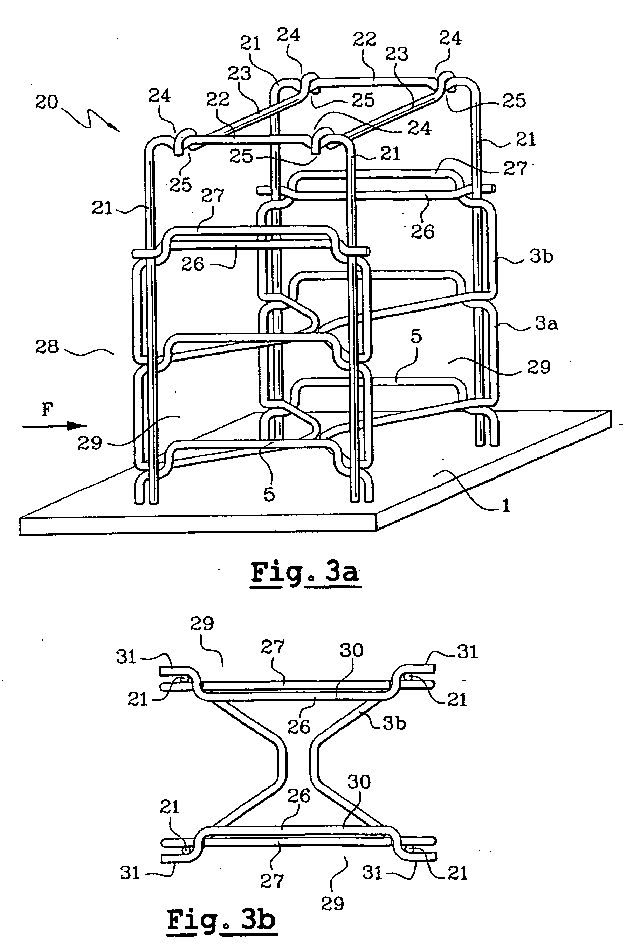

A la figure 3a on a représenté une variante du dispositif de manutention ou de stockage dont le plateau 1 comporte un moyen de stabilisation repéré généralement par 20 et destiné à maintenir l'empilement de modules 3a, 3b, de façon à éviter qu'ils basculent accidentellement. Ce moyen de stabilisation 20 est constitué de quatre montants verticaux 21 fixés par leurs extrémités inférieures dans le plateau 1 et reliés à leurs extrémités supérieures par deux traverses fixes 22 et deux traverses mobiles 23. Les deux traverses fixes 22 sont conformées au voisinage de leurs raccordements avec les montants verticaux 21 de façon à former des demi-anneaux 24 orientés vers le bas et destinés à recevoir les extrémités 25 des traverses mobiles 23 qui sont conformées en forme de crochet. Les demi-anneaux 24 et les crochets 25 sont dimensionnés de telle sorte que les traverses mobiles soient légèrement clipsées sur les traverses fixes.

En outre, deux barres de maintien 26 mobiles, comportant des extrémités en forme de S, sont disposées au niveau des parties supérieures 27 du module supérieur 3b de façon à solidariser le module supérieur 3b avec les montants verticaux 21.

Les bacs pour aliments sont introduits dans le dispositif de maintien ou de stockage dans le sens de la flèche F perpendiculaire à la façade 28.

Comme on peut le voir sur la figure 3b, l'écartement des montants verticaux 21 sur la façade 28 est légèrement supérieure à la largeur des modules 3a, 3b, de façon à permettre de glisser ces modules entre les montants verticaux. L'écartement des montants verticaux 21 sur les faces latérales 29 est inférieure à la longueur des modules 3a, 3b, de façon à ce que les montants verticaux 21 maintiennent latéralement la colonne de modules, laquelle colonne est comprise entre les montants verticaux 21.

Du fait de la conformation en S des extrémités des barres de maintien 26, la partie centrale 30 de chaque barre de maintien est située à l'intérieur du module 3b et chaque extrémité 31 passe à l'extérieur des montants verticaux 21 de telle sorte que l'ensemble est verrouillé. Ces barres peuvent être mises en places et retirées à volonté, ce qui permet de monter et démonter facilement le dispositif de stockage ou de manutention.

Dans une variante du système de stabilisation, représenté partiellement à la figure 3c, les barres de maintien 26 sont disposées parallèlement à la façade 28 et sont glissées entre les montants verticaux 21 du système de stabilisation et partie supérieure 27 du module supérieur 3b, dans la zone des angles rentrants des faces latérales du module. Les barres de maintien 26 peuvent comporter à leurs extrémités des anneaux 26a et 26b entourant les montants verticaux 21 et qui permettent à la fois de solidariser les barres de maintien 26 et les montants verticaux 21, et de faire glisser les barres de maintien de haut en bas, ce qui permet de verrouiller ou déverrouiller les modules

On va maintenant décrire plus en détail trois modes particuliers de réalisation des modules.

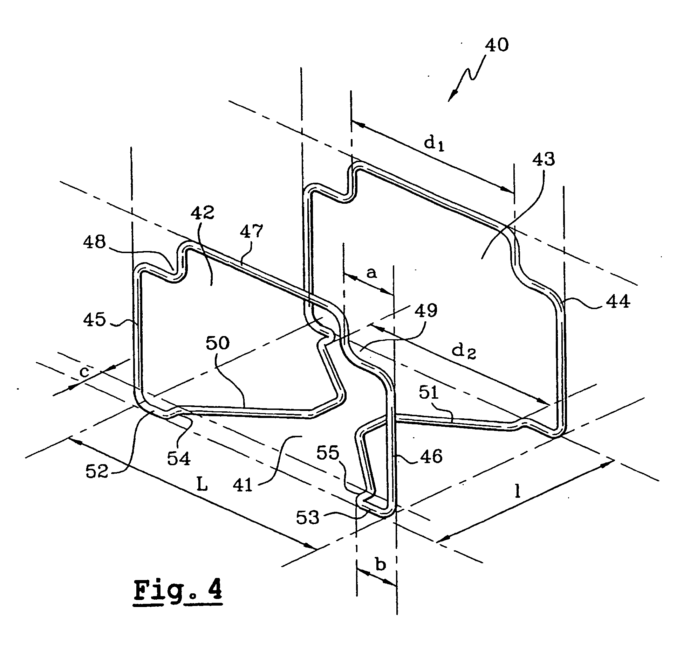

Dans un premier mode de réalisation des modules, représenté à la figure 4, et déjà partiellement décrit précédemment, chaque module est constitué d'un tube ou d'un fil plié dont les extrémités sont raccordées bout à bout par soudage pour former une structure fermée s'inscrivant dans un parallélépipède rectangle.

Le module repéré généralement par 40 à la figure 4, comporte un fond 41 et deux faces latérales 42 et 43 identiques matérialisés par la structure tubulaire 44 continue. Chaque face latérale 42 ou 43 (on ne décrira que la face 42), comprend deux montants verticaux 45 et 46, et une traverse supérieure 47 horizontale reliée aux montants verticaux 45 et 46 par des angles rentrants 48 et 49. L'écartement I des faces latérales est supérieur à la largeur d'un bac pour aliments tel qu'un bac pour aliments normalisé gastronormes. De préférence, la longueur L d'une face latérale est supérieure à la longueur d'un bac pour aliments tel qu'un bac pour aliments normalisé gastronormes. La traverse supérieure 47 et les angles rentrants 48 et 49 forment l'arête supérieure de la face latérale 42. La traverse supérieure 47, les angles rentrants 48 et 49, et les montants verticaux 45 et 46 constituent l'arête extérieure de la face latérale 42.

Le fond 41 est constitué de deux structures 50 et 51 en forme générale de V en regard l'une de l'autre, les pointes des V étant situées à peu près au centre de la face inférieure. Chaque V est raccordé aux montants verticaux 45 ou 46 par l'intermédiaire d'une part d'un prolongement horizontal 52 ou 53 du montant vertical correspondant 45 ou 46, s'étendant le long de l'arête inférieure de la face latérale 42 et dirigé vers l'intérieur du module, et par un brin de raccordement 54 ou 55, situé dans le plan du fond 41, et perpendiculaire à la face latérale 42.

La largeur a de l'angle rentrant 48 ou 49 est sensiblement égale à la longueur b du prolongement horizontal 52 d'un montant vertical et la longueur c du brin de raccordement 53 est sensiblement égal à l'épaisseur de la face latérale 42, c'est à dire au diamètre du tube dont elle est constituée. De la sorte, la distance d1 qui sépare les extrémités extérieures de la traverse supérieure 47 étant inférieure à la distance d2 qui sépare les extrémités internes de l'arête inférieure de la face latérale 42, lorsque deux modules sont superposés, la partie supérieure de chaque face latérale du module inférieur peut s'encastrer dans la partie inférieure du module supérieur. En outre, la hauteur des angles rentrants 48 ou 49 est suffisante pour que, lorsque deux modules sont empilés, la traverse horizontale 47 de la face latérale 42 dépasse sensiblement au dessus du fond du module supérieur, de façon à empêcher de glisser un bac pour aliment à travers la face latérale du module supérieur.

Afin d'éviter le glissement accidentel des bacs pour aliments disposés dans les modules, le fond de chaque module comporte une légère dépression en son centre. Pour cela, les structures en forme de V, 50 et 51, sont légèrement inclinées vers le bas.

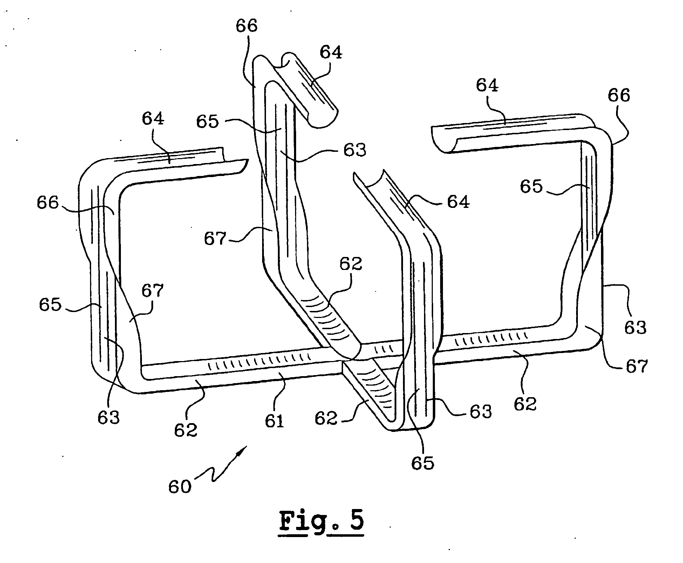

Dans un deuxième mode de réalisation représenté à la figure 5, le module repéré généralement par 60 est constitué d'un croisillon 61 faisant office de fond. Chaque bras 62 du croisillon 61 est prolongé par un montant vertical 63 lui-même prolongé par un bras horizontal 64 dirigé en direction de l'axe vertical du module. Les faces latérales du module sont constituées par les plans définis par deux montants verticaux 63 adjacents. La partie supérieure du module est constituée par les bras horizontaux 64 et la partie inférieure du module est constituée par le croisillon 61.

Chaque bras 62 du croisillon 61 est en forme de gouttière dont la convexité est tournée vers le bas, c'est à dire vers l'extérieur du module, de façon à ce que les bras du croisillon soient bombés vers l'extérieur du module.

Les bras horizontaux 64 sont également en forme de gouttière dont la concavité est tournée vers le haut. Cette concavité des bras horizontaux 64 est complémentaire de la convexité des bras 62 du croisillon 61 de telle sorte que, lorsque deux modules sont empilés, les bras 62 du croisillon du module supérieur viennent s'emboîter dans les bras horizontaux 64 de la partie supérieure du croisillon inférieur.

Les montants verticaux 63 comportent des raidisseurs 65 destinés à assurer leur rigidité afin qu'ils puissent supporter le poids d'un empilement important.

De préférence, les bras du croisillon 61 forment entre eux des angles tels que le fond du module s'inscrive dans un rectangle comportant un grand côté et un petit côté de telle sorte que les bacs pour aliments ne puissent être introduits dans le module que dans une seule direction.

Ce module peut être fabriqué à partir d'une pièce en tôle en forme de croix qui est emboutie et pliée de telle sorte que les parois latérales des bras 62 du croisillon et des bras horizontaux 64 forment des ailes 66 et 67 sur les montants verticaux 63.

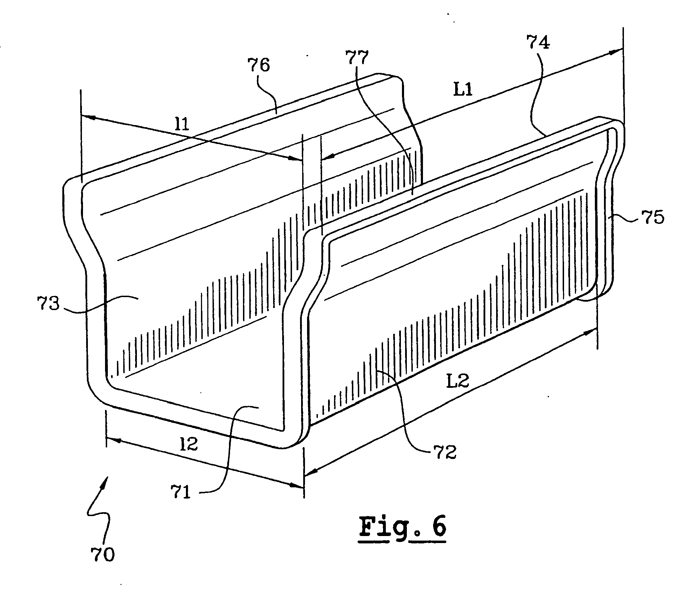

Dans un troisième mode de réalisation, représenté à la figure 6, le module repéré généralement par 70 est constitué d'une plaque conformée de façon à former un fond 71 et deux parois verticales 72 et 73. La périphérie 74 du module est ourlée de façon à former un rebord 75 orienté vers l'extérieur. Les faces latérales et le fond sont raccordés par des arrondis de façon à ne pas former d'angle droit aigu qui serait difficile à nettoyer.

La longueur extérieure L1 des arêtes supérieures 76 et 77 des faces latérales 72 et 73 est légèrement inférieure à la longueur intérieure L2 des faces latérales au niveau du fond. On entend par longueur intérieure L2, la longueur mesurée entre les parties internes des rebords 75.

La largeur interne I1 du module, mesurée au niveau des arêtes supérieures 76 et 77 des faces latérales 72 et 73, est légèrement supérieure à la largeur externe 12 du module, mesurée au niveau du bas des faces latérales, c'est à dire à peu près au niveau du fond. Par largeur externe, on entend la distance entre les surfaces externes des faces latérales.

Ainsi conformé, un module supérieur peut être disposé au-dessus d'un module inférieur de telle sorte que le fond du module supérieur et les arêtes supérieures des faces latérales du module inférieur viennent s'emboîter avec encastrement. Ce module peut être fabriqué par exemple par emboutissage d'une plaque métallique ou par moulage d'une matière plastique adaptée.

Les modules qui viennent d'être décrits peuvent être en tout matériau suffisamment résistant et facile à nettoyer, mais de préférence, ils sont fabriqués en acier inoxydable.

Le lecteur comprendra que le dispositif qui vient d'être décrit peut être utilisé en restauration collective ou commerciale, en milieu hospitalier ou pharmaceutique, et plus généralement dans tout domaine d'activité dans lequel les problèmes d'hygiène sont importants.

Le dispositif selon l'invention peut être utilisé notamment pour le stockage en chambre froide ou en armoire froide, dans des fours ou des étuves, dans des machines de lavage automatique tels que des laves batteries, pour le transport dans un lieu d'utilisation ou entre plusieurs lieux d'utilisation.

Ce dispositif est adapté non seulement au stockage ou à la manutention de bacs pour aliments tels que les bacs normalisés GastroNormes ou Euronormes, mais également au stockage ou à la manutention des cagettes, grilles, plaques, et plus généralement à tout autre type de contenant, quel que soit la nature du contenu et le domaine d'utilisation. Il suffit simplement que les dimensions des modules soit adaptées à celles des contenants qu'on veut stocker.

En outre, le dispositif peut être réalisé non seulement en acier inoxydable, mais également en tout matériau adapté à l'utilisation envisagée, et par exemple en matière plastique moulée, thermoformée, extrudée ou pultrudée.

## Revendications

1. Dispositif (9) de stockage ou de manutention de bacs pour aliments pour collectivités ou analogues constitué d'une pluralité de modules (3, 3', 3a, 3b) séparables empilés de façon à former au moins une colonne (2, 2') et d'un plateau support (1) comportant au moins un moyen de réception (5) d'un module (3, 3'), chaque module (3, 3', 3a, 3b) étant destiné à recevoir un bac pour aliments (4, 4a, 4b) et étant conformé de telle sorte que la partie inférieure (7) de chaque module s'encastre dans la partie supérieure (8) d'un autre module ou dans un moyen de réception (5, 5') d'un module du plateau support (1) **caractérisé en ce que** les modules (3, 3', 3a, 3b) ne comportent pas de cavité ouverte ni d'angles droits aigu rentrants.

2. Dispositif selon la revendication 1 **caractérisé en ce que** au moins un module (3, 3', 3a, 3b) est conformé de telle sorte qu'un bac pour aliments (4, 4a, 4b) puisse être introduit et retiré dudit module en le faisant glisser sur la partie inférieure (16a, 16b) dudit module et que ledit bac ne puisse être introduit que dans une seule direction par rapport audit module.

3. Dispositif selon l'une quelconque des revendications 1 à 2 **caractérisé en ce que** au moins un module (3, 3', 3a, 3b) est conformé de telle sorte qu'un bac (4, 4a, 4b) disposé dans le module ne puise pas glisser accidentellement hors du module.

4. Dispositif selon l'une quelconque des revendications 1 à 3 **caractérisé en ce que** le plateau support (1) ne comporte pas de cavité ouverte.

5. Dispositif selon l'une quelconque des revendications précédentes **caractérisé en ce que** le plateau support comporte des moyens (6) pour le faire rouler sur le sol.

6. Dispositif selon l'une quelconque des revendications 1 à 5 **caractérisé en ce qu'**il comporte en outre un moyen de stabilisation (20) des modules empilés (3a, 3b).

7. Dispositif selon la revendication 6 **caractérisé en ce que** le moyen de stabilisation (20) des modules empilés est constitué de montants verticaux (21) fixés sur le plateau support (1) et de barres mobiles (26) disposées à la partie supérieure (27) du module supérieur (3b) d'une colonne de modules, la colonne de modules étant comprise entre les montants verticaux (21) et les barres mobiles (26) assurant un verrouillage du module supérieur (3b) et des montants verticaux (21).

8. Module (40; 60, 70) pour un dispositif de stockage ou de manutention de bacs pour aliments ou analogues selon l'une quelconque des revendications 1 à 7 **caractérisé en ce qu'**il comporte deux faces latérales (42, 43,72, 73) dont l'écartement est supérieur ou égal à la largeur d'un bac pour aliments et un fond (41, 71) destiné à recevoir un bac pour aliments, la partie supérieure (47, 64, 76, 77) dudit module étant conformée de telle sorte qu'elle puisse recevoir avec encastrement la partie inférieure d'un autre module, de telle sorte que, au moins après encastrement d'un module supérieur dans un module inférieur, il ne soit pas possible d'introduire un bac pour aliments dans le module supérieur en le faisant glisser perpendiculairement aux faces latérales dudit module supérieur, le module ne comportant ni cavité ouverte ni angle droit aigu rentrant.

9. Module selon la revendication 8 **caractérisé en ce qu'**il est constitué d'un fil ou d'un tube plié de façon à former au moins les arêtes extérieures des faces latérales (42, 43) et un fond (41) capable de recevoir un bac pour aliments, les extrémités du fil ou du tube étant raccordées de façon à former une structure continue (44).

10. Module selon la revendication 9 **caractérisé en ce que** chaque face latérale (42, 43) comporte deux montants verticaux (45, 46) et une traverse supérieure (47) généralement horizontale raccordée aux montants verticaux (45, 46) par des angles rentrants (48, 49), la distance (d1) qui sépare les extrémités extérieures de la traverse supérieure (47) généralement horizontale étant inférieure à la distance (d2) qui sépare les extrémités internes de l'arête inférieure de la dite face de telle sorte que l'arête supérieure d'une face d'un module puisse s'encastrer dans l'arête inférieure d'une face d'un autre module.

11. Module selon la revendication 9 ou 10 **caractérisé en ce que** deux portions du tube ou du fil dont est constitué le module sont pliées pour s'étendre sur la face inférieure du module de façon à former un fond (41) susceptible de recevoir un bac pour aliments et sont raccordées aux montants verticaux (45, 46) de telle sorte que les arêtes supérieures des faces latérales (42, 43) d'un module puissent s'encastrer dans la partie inférieure d'un autre module.

12. Module selon la revendication 11 **caractérisé en ce que** les deux portions du tube ou du fil pliées de façon à constituer le fond (41) du module sont légèrement inclinées par rapport au plan du fond du module de telle, sorte que le fond (41) du module ait une légère concavité orientée vers l'intérieur du module.

13. Module selon l'une quelconque des revendications 9 à 12 **caractérisé en ce que** les extrémités du fil ou du tube sont raccordées par soudage bout à bout.

14. Module selon la revendication 8 **caractérisé en ce qu'**il est constitué d'une plaque pliée et emboutie de façon à former un fond (71) et deux parois latérales (72, 73), la périphérie (74) du module étant ourlée, l'écartement interne (11) des arêtes supérieures (76, 77) des faces latérales (72, 73) étant supérieur ou égal à l'écartement extérieur (12) des faces latérales (72. 73) au voisinage du fond (71), et la longueur extérieure (L1) des arêtes supérieures (76, 77) des faces latérales (72, 73) étant inférieure ou égale à la longueur intérieure (L2) des faces latérales (72, 73) au niveau du fond (71), de telle sorte que les arêtes supérieures des faces latérales d'un module puissent s'encastrer dans la partie inférieure d'un autre module.

15. Module selon la revendication 8 **caractérisé en ce que** le fond est constitué d'un croisillon (61) dont les bras (62) sont bombés vers l'extérieur du module et sont prolongés par des montants verticaux (63) comportant des raidisseurs (65), les montants verticaux (63) étant prolongés par des bras horizontaux (64) s'étendant en direction de l'axe vertical du module, les faces supérieures des dits bras horizontaux étant conformés en forme de gouttière de façon à pouvoir coopérer avec les faces inférieures des bras (62) du croisillon d'un autre module.

16. Module selon l'une quelconque des revendications 8 à 15 **caractérisé en ce qu'**il est en acier inoxydable.

## Claims

1. Arrangement (9) for storing or handling containers for food for groups or the like, composed of a plurality of separable modules (3, 3', 3a, 3b), which are stacked so as to form at least one column (2, 2'), and of a support platform (1) comprising at least one receiving means (5) for a module (3, 3'), each module (3, 3', 3a, 3b) being arranged to receive a food container (4, 4a, 4b) and being constructed so that the lower part (7) of each module lodges in the upper part (8) of another module or in a module-receiving means (5, 5') of the support platform (1), **characterised in that** the modules (3, 3', 3a, 3b) do not have any open cavities or any re-entrant sharp rectilinear corners.

2. Arrangement according to claim 1, **characterised in that** at least one module (3, 3', 3a, 3b) is constructed so that a food container (4, 4a, 4b) can be introduced and withdrawn from said module by sliding it on the lower part (16a, 16b) of said module and so that said container can be introduced in only one direction with respect to said module.

3. Arrangement according to any one of claims 1 to 2, **characterised in that** at least one module (3, 3', 3a, 3b) is constructed so that a container (4, 4a, 4b) placed in the module cannot slide out of the module accidentally.

4. Arrangement according to any one of claims 1 to 3, **characterised in that** the support platform (1) does not have any open cavities.

5. Arrangement according to any one of the preceding claims, **characterised in that** the support platform has means (6) for it to be made to run on the ground.

6. Arrangement according to any one of claims 1 to 5, **characterised in that** it additionally comprises a means (20) for stabilising the stacked modules (3a, 3b).

7. Arrangement according to claim 6, **characterised in that** the means (20) for stabilising the stacked modules is composed of vertical uprights (21), which are fixed on the support platform (1), and of movable bars (26) provided on the upper part (27) of the upper module (3b) of a column of modules, the column of modules being contained between the vertical uprights (21) and the movable bars (26) ensuring locking of the upper module (3b) and the vertical uprights (21).

8. Module (40, 60, 70) for an arrangement for storing or handling food containers or the like according to any one of claims 1 to 7, **characterised in that** it has two side faces (42, 43, 72, 73), the spacing between which is greater than or equal to the width of a food container, and a base (41, 71) arranged to receive a food container, the upper part (47, 64, 76, 77) of said module being constructed so that the lower part of another module can be lodged therein, so that, at least after an upper module has been lodged in a lower module, it is not possible to introduce a food container into the upper module by sliding it perpendicular to the side faces of said upper module, the module having neither open cavities nor re-entrant sharp rectilinear corners.

9. Module according to claim 8, **characterised in that** it is composed of a wire or tube bent so as to form at least the external edges of the side faces (42, 43) and a base (41) capable of receiving a food container, the ends of the wire or tube being joined so as to form a continuous structure (44).

10. Module according to claim 9, **characterised in that** each side face (42, 43) has two vertical uprights (45, 46) and a generally horizontal upper cross-member (47) joined to the vertical uprights (45, 46) by re-entrant corners (48, 49), the distance (d1) which separates the external ends of the generally horizontal upper cross-member (47) being less than the distance (d2) which separates the internal ends of the lower edge of said face so that the upper edge of a face of a module can lodge in the lower edge of a face of another module.

11. Module according to claim 9 or 10, **characterised in that** two portions of the tube or wire from which the module is made are bent so as to extend over the lower face of the module so as to form a base (41) capable of receiving a food container and are joined to the vertical uprights (45, 46) so that the upper edges of the side faces (42, 43) of a module can lodge in the lower part of another module.

12. Module according to claim 11, **characterised in that** the two portions of the tube or wire bent so as to form the base (41) of the module are slightly inclined with respect to the plane of the base of the module so that the base (41) of the module has a slight concavity oriented towards the interior of the module.

13. Module according to any one of claims 9 to 12, **characterised in that** the ends of the wire or tube are joined by butt-welding.

14. Module according to claim 8, **characterised in that** it is composed of a plate bent and drawn so as to form a base (71) and two side walls (72, 73), the periphery (74) of the module being turned-over, the internal spacing (I1) between the upper edges (76, 77) of the side faces (72, 73) being greater than or equal to the external spacing (12) between the side faces (72, 73) in the vicinity of the base (71), and the external length (L1) of the upper edges (76, 77) of the side faces (72, 73) being less than or equal to the internal length (L2) of the side faces (72, 73) at the level of the base (71), so that the upper edges of the side faces of a module can lodge in the lower part of another module.

15. Module according to claim 8, **characterised in that** the base is composed of a cross-piece arrangement (61), the arms (62) of which have a curvature in the direction of the exterior of the module and extend into vertical uprights (63) which include stiffeners (65), the vertical uprights (63) extending into horizontal arms (64) which extend towards the vertical axis of the module, the upper faces of said horizontal arms being of trough-shaped construction so as to be able to co-operate with the lower faces of the arms (62) of the cross-piece arrangement of another module.

16. Module according to any one of claims 8 to 15, **characterised in that** it is made of stainless steel.

## Patentansprüche

1. Vorrichtung (9) zum Lagern oder Befördern von Behältern für Lebensmittel für Gemeinschaften oder dergleichen, die gebildet ist aus einer Mehrzahl von trennbaren Modulen (3, 3', 3a, 3b), die so aufeinander gestapelt sind, dass sie mindestens eine Säule (2, 2') bilden, und aus einer Halteplatte (1), die mindestens ein Mittel (5) zum Aufnehmen eines Moduls (3, 3') aufweist, wobei jedes Modul (3, 3', 3a, 3b) zum Aufnehmen eines Behälters für Lebensmittel (4, 4a, 4b) bestimmt ist und derart angepasst ist, dass der untere Teil (7) von jedem Modul in den oberen Teil (8) eines anderen Moduls oder in ein Mittel zur Aufnahme (5, 5') eines Moduls der Halteplatte (1) versenkbar ist, **dadurch gekennzeichnet, dass** die Module (3, 3', 3a, 3b) weder einen offenen Hohlraum noch rechte, spitze, einspringende Winkel aufweisen.

2. Vorrichtung gemäß Anspruch 1, **dadurch gekennzeichnet, dass** mindestens ein Modul (3, 3', 3a, 3b) derart angepasst ist, dass ein Behälter für Lebensmittel (4, 4a, 4b) in das Modul eingeführt und aus diesem wieder herausgezogen werden kann, indem er auf den unteren Teil (16a, 16b) des Moduls geschoben wird, und derart, dass der Behälter nur in eine einzige Richtung relativ zu dem Modul eingeführt werden kann.

3. Vorrichtung gemäß einem der Ansprüche 1 bis 2, **dadurch gekennzeichnet, dass** mindestens ein Modul (3, 3', 3a, 3b) derart angepasst ist, dass ein Behälter (4, 4a, 4b), der in dem Modul angeordnet ist, nicht zufällig aus dem Modul herausgleiten kann.

4. Vorrichtung gemäß einem der Ansprüche 1 bis 3, **dadurch gekennzeichnet, dass** die Halteplatte (1) keinen offenen Hohlraum aufweist.

5. Vorrichtung gemäß einem der vorhergehenden Ansprüche, **dadurch gekennzeichnet, dass** die Halteplatte Mittel (6) zum Rollen derselben auf dem Boden aufweist.

6. Vorrichtung gemäß einem der Ansprüche 1 bis 5, **dadurch gekennzeichnet, dass** sie ferner ein Mittel (20) zur Stabilisierung der aufgestapelten Module (3a, 3b) aufweist.

7. Vorrichtung gemäß Anspruch 6, **dadurch gekennzeichnet, dass** das Mittel (20) zur Stabilisierung der aufgestapelten Module aus vertikalen Stützen (21), die an der Halteplatte (1) befestigt sind, und aus beweglichen Stangen (26) gebildet ist, die an dem oberen Teil (27) des oberen Moduls (3b) einer Säule von Modulen angeordnet sind, wobei sich die Säule von Modulen zwischen den vertikalen Stützen (21) und den beweglichen Stangen (26) befindet, wobei ein Verriegeln des oberen Moduls (3b) und der vertikalen Stützen (21) sichergestellt wird.

8. Modul (40, 60, 70) für eine Vorrichtung zum Lagern oder Befördern von Behältern für Lebensmittel oder dergleichen gemäß einem der Ansprüche 1 bis 7, **dadurch gekennzeichnet, dass** es aufweist: zwei Seitenflächen (42, 43, 72, 73), deren Abstand größer oder gleich der Breite eines Lebensmittelbehälters ist, und einen Boden (41, 71), der zum Aufnehmen eines Lebensmittelbehälters vorgesehen ist, wobei der obere Teil (47, 64, 76, 77) des Moduls derart angepasst ist, dass er via Versenken den unteren Teil eines anderen Moduls aufnehmen kann, derart, dass es zumindest nach dem Versenken eines oberen Moduls in ein unteres Modul nicht möglich ist, einen Behälter für Lebensmittel in das obere Modul dadurch einzuführen, dass er senkrecht zu den Seitenflächen des oberen Moduls geschoben wird, wobei das Modul weder einen offenen Hohlraum noch einen rechten, spitzen, einspringenden Winkel aufweist.

9. Modul gemäß Anspruch 8, **dadurch gekennzeichnet, dass** es aus einem Draht oder einem Rohr gebildet ist, das so gebogen ist, dass mindestens die äußeren Ränder der Seitenflächen (42, 43) und ein Boden (41) gebildet werden, der zum Aufnehmen eines Lebensmittelbehälters geeignet ist, wobei die Enden des Drahtes oder des Rohres so verbunden sind, dass eine durchgehende Struktur (44) gebildet wird.

10. Modul gemäß Anspruch 9, **dadurch gekennzeichnet, dass** jede Seitenfläche (42, 43) zwei vertikale Stützen (45, 46) und einen oberen im Allgemeinen horizontalen Querträger (47) aufweist, der mit den vertikalen Stützen (45, 46) durch einspringende Winkel (48, 49) verbunden ist, wobei der Abstand (d1), der die äußeren Enden von dem oberen im Allgemeinen horizontalen Querträger (47) trennt, kleiner ist als der Abstand (d2), der die inneren Enden des unteren Randes der Seite trennt, so dass der obere Rand einer Seite eines Moduls in den unteren Rand einer Seite eines anderen Moduls versenkt werden kann.

11. Modul gemäß Anspruch 9 oder 10, **dadurch gekennzeichnet, dass** zwei Abschnitte des Rohres oder des Drahtes, aus welchem das Modul gebildet ist, gebogen sind, um sich über die untere Seite des Moduls zu erstrecken, so dass ein Boden (41) gebildet wird, der zum Aufnehmen eines Behälters für Lebensmittel geeignet ist, und dass sie mit den vertikalen Stützen (45, 46) derart verbunden sind, dass die oberen Ränder der Seitenflächen (42, 43) eines Moduls in den unteren Teil eines anderen Moduls versenkt werden können.

12. Modul gemäß Anspruch 11, **dadurch gekennzeichnet, dass** die beiden Abschnitte des Rohres oder des Drahtes, die so gebogen sind, dass sie den Boden (41) des Moduls bilden, relativ zu der Ebene des Bodens des Moduls leicht geneigt sind, so dass der Boden (41) des Moduls eine leichte Konkavität aufweist, die in Richtung zu dem Inneren des Moduls ausgerichtet ist.

13. Modul gemäß einem der Ansprüche 9 bis 12, **dadurch gekennzeichnet, dass** die Enden des Drahtes oder des Rohres durch Aneinanderschweißen verbunden sind.

14. Modul gemäß Anspruch 8, **dadurch gekennzeichnet, dass** es aus einer Platte gebildet ist, die so gebogen und ausgetieft ist, dass sie einen Boden (71) und zwei Seitenwände (72, 73) bildet, wobei der Umfang (74) des Moduls gesäumt ist, wobei der innere Abstand (11) der oberen Ränder (76, 77) der Seitenflächen (72, 73) größer oder gleich dem äußeren Abstand (12) der Seitenflächen (72, 73) in der Nähe des Bodens (71) ist, und wobei die äußere Länge (L1) der oberen Ränder (76, 77) der Seitenflächen (72, 73) kleiner oder gleich der inneren Länge (L2) der Seitenflächen (72, 73) auf dem Niveau des Bodens (71) ist, so dass die oberen Ränder der Seitenflächen eines Moduls genau in den unteren Teil eines anderen Moduls hineinpassen können.

15. Modul gemäß Anspruch 8, **dadurch gekennzeichnet, dass** der Boden aus einem Kreuz (61) gebildet ist, dessen Arme (62) in Richtung nach außen von dem Modul gewölbt sind und durch vertikale Stützen (63) verlängert sind, die Versteifungen (65) aufweisen, wobei die vertikalen Stützen (63) durch horizontale Arme (64) verlängert sind, die sich in Richtung zu der vertikalen Achse des Moduls erstrecken, wobei die oberen Seiten der horizontalen Arme in Form einer Rinne angepasst sind, so dass sie mit den unteren Seiten der Arme (62) des Kreuzes eines anderen Moduls zusammenwirken können.

16. Modul gemäß einem der Ansprüche 8 bis 15, **dadurch gekennzeichnet, dass** es aus rostfreiem Stahl ist.
